Europäisches Patentamt

European Patent Office

Office européen des brevets

(11) Veröffentlichungsnummer: **0 417 536 A1**

# EUROPÄISCHE PATENTANMELDUNG

(21) Anmeldenummer: 90116355.0

(22) Anmeldetag: 27.08.90

(51) Int. Cl.⁵: **F16D 3/38**

(30) Priorität: 12.09.89 DE 8910846 U

(43) Veröffentlichungstag der Anmeldung:
**20.03.91 Patentblatt 91/12**

(84) Benannte Vertragsstaaten:
**CH ES FR GB IT LI SE**

(71) Anmelder: **LANZ INDUSTRIE-TECHNIK AG**

**CH-4855 Wolfwil(CH)**

Anmelder: **WILLI ELBE GELENKWELLEN GMBH & CO KG**

**W-7146 Tamm(DE)**

(72) Erfinder: **Ehrenberg, Kurt**
**Sin Tea 1**
**CH-6914 Carona(CH)**
Erfinder: **Meyle, Lothar**
**Rosenstrasse 20**
**W-7120 Bietigheim-Bissingen(DE)**

(74) Vertreter: **Meier, Robert, Dipl.-Ing.**
**Patentanwalt Dipl.-Ing. Robert Meier Auf dem Mühlberg 16**
**W-6000 Frankfurt am Main 70(DE)**

(54) **Aus einer Blechplatine geformte Gelenkgabel.**

(57) Eine aus einer Blechplatine geformte Gelenkgabel für Kreuzgelenke mit zwei Gabelarmen für je eine Aufnahmeöffnung für ein Drehzapfenlager und einem diese miteinander und mit einer Anschlußwelle verbindenden Kraftübertragungsbereich ist so ausgebildet, daß jeder Gabelarm (4) zwei Randbereiche (5, 6) von Blechdicke (3) und einen dazwischen liegenden Bereich (7) aufweist, dessen Breite (8) innen keiner ist als der Durchmesser (15) der Aufnahmeöffnung (14) für das Drehzapfenlager und dessen Dicke (9) zumindest in den Übergangsbereichen (10, 11) zu den Randbereichen (5, 6) um einen Betrag x (12) stärker ist, als die Blechdicke (3).

Fig. 1

## AUS EINER BLECHPLATINE GEFORMTE GELENKGABEL

Die Erfindung bezieht sich auf eine aus einer Blechplatine geformte Gelenkgabel für Kreuzgelenke mit zwei Gabelarmen für je eine Aufnahmeöffnung für ein Drehzapfenlager und einem diese miteinander und mit einer Anschlußwelle verbindenden Kraftübertragungsbereich.

Bekannt geworden ist eine Gelenkhälfte für Kreuzgelenke, bestehend aus einer einstückigen, aus einer Blechplatine vorgefertigten, im wesentlichen U-förmigen Gelenkgabel, die zwei Gabelarme mit je einer Aufnahmeöffnung für ein Drehzapfenlager sowie einen Gabelboden aufweist, an den ein Anschlußstück zum Ein- bzw. Abführen der Drehmomente stoffschlüssig anschließbar ist. Das besondere an dieser Gelenkhälfte ist, daß im Übergangsbereich zwischen jedem Gabelarm und dem Gabelboden wenigstens eine radial nach innen hineinreichende Versteifungssicke angeordnet ist, und zwischen den Außenrändern der Gabelarme und dem Außenrand des Gabelbodens Versteifungsstücke vorgesehen sind, und daß das als Flanschanschluß oder Wellenanschluß-Verschiebestück oder als Wellenanschlußbolzen oder Wellenanschluß-Klemmstück ausgebildete Anschlußstück eine dem Gabelboden entsprechende ebene Berührungsfläche aufweist, und daß entlang oder zwischen den Berührungsflächen Schweißnähte oder eine Klebeschicht angebracht sind (DE-PS 2 900 846).

Bei dieser bekannten Gelenkhälffe ist die Gelenkgabel zusammen mit den Aufnahmeöffnungen für die Drehzapfenlager und die Zentralöffnung ein Fertigpreßteil. Die Öffnungen werden beim Fertigpressen mit eingebracht und, um gegebenenfalls besonders kritische Toleranzen einhalten zu können, zugleich auch beim Fertigpressen kalibriert.

Um die Außenränder der Aufnahmeöffnungen für die Drehzapfenlager herum sitzen aus den Gabelarmen herausgezogene Verbreiterungsringe, um die Anlagefläche für die Drehzapfenlager zu vergrößern.

Je nach Belastung werden zur Herstellung der Gelenkgabeln Stahltiefziehbleche mit einer Festigkeit ab 30 kg pro mm² mit Vergütungsmöglichkeit verwendet. Je nach dem Umständen kann das Blech vorvergütet sein oder aber die fertige Gelenkgabel kann anschließend einer Vergütungsbehandlung zugeführt werden. Alle Öffnungen, insbesondere die Aufnahmeöffnungen für die Drehzapfenlager können durch Nachkalibrieren auf jedes gewünschte Toleranzmaß gebracht werden. Ebenso lassen sich bei den erfindungsgemäßen Gelenkhälften alle Öffnungen für Lager und Wellenanschlüsse durch einen Nachzug von Fransen bzw. unrunden Lochausbildungen befreien. Der Nachzug findet in üblicher Weise über einen Dorn auf die gewünschten Fertigmaße statt.

Die Verbreiterungsringe um die Aufnahmeöffnungen verbreitern zwar die Anlageflächen für die Drehzapfenlager und verbessern dadurch die Drehmomentenübertragung, bei der Herstellung der Gelenkgabel aus einer Blechplatine sind dafür jedoch mehrere Arbeitsgänge erforderlich. Für jede Aufnahmeöffnung muß zunächst ein Loch eingebracht werden, welches danach auf einer besonderen Matrize mittels eines Dornes ausgeweitet wird, wobei zugleich der jeweilige Verbreiterungsring geformt wird. Diese Arbeitsgänge müssen an der noch flachen Blechplatine erfolgen, wenn die Verbreiterungsringe bei der fertigen Gelenkgabel nach außen ragen sollen.

Der vorliegenden Erfindung liegt die Aufgabe zugrunde, hier Abhilfe zu schaffen und eine Gelenkgabel nach dem Oberbegriff des Anspruchs 1 zu schaffen, bei der eine Verbreiterung der Aufnahmeflächen für die Drehzapfenlager in den Aufnahmeöffnungen möglich ist, ohne daß dafür die bisher üblichen Verbreiterungsringe aus den Gelenkarmen ausgeformt werden müssen.

Es wurde gefunden, daß sich diese Aufgabe in einfacher Weise dadurch erreichen läßt, daß jeder Gabelarm zwei Randbereiche von Blechdicke und einen dazwischen liegenden mittleren Bereich aufweist, dessen Breite innen kleiner ist als der Durchmesser der Aufnahmeöffnung für das Drehzapfenlager und dessen Dicke zumindest in den Übergangsbereichen zu den Randbereichen, um einen Betrag x stärker ist, als die Blechdicke.

Diese Formgebung der Gabelarme ergibt sich beim Fertigpressen. Durch ein geschicktes Durchprägen/ Sicken der Gabelarme ist es möglich, jede erforderliche Dicke der mittleren Bereiche, insbesondere der Übergangsbereiche zwischen diesen und den Randbereichen herzustellen.

Die mittleren Bereiche können dabei gemäß Anspruch 1 ihre besondere Verdickung entweder in den Übergangsbereichen zu den Randbereichen erfahren, aber auch gemäß Anspruch 2 ausgebildet sein. Oft genügt es, wenn die Aufnahmeöffnungen nur zu den Randbereichen der Gabelarme hin eine verstärkte Anlagefläche aufweisen.

In diesem Fall sind die Aufnahmeöffnungen gemäß Anspruch 3 in die Gabelarme eingebracht.

Wenn hingegen die Anlageflächen für die Drehzapfenlager entlang des gesamten Umfanges der Aufnahmeöffnung die gewünschte Breite aufweisen sollen, sind die Gelenkgabeln nach den Ansprüchen 2 und 4 hergestellt.

Der mittlere Bereich in den Gelenkarmen ist gemäß Anspruch 5 ausgebildet. Dadurch ist es möglich, ihn beim Fertigpressen herzustellen.

Je nach dem die Werkzeuge beim Fertigpressen ausgewählt sind, kann der Betrag x, um den die Stärke des mittleren Bereiches größer ist als die Blechdicke dem 0,2 bis 0,5-fachen der Blechdicke entsprechen. Normalerweise entspricht der Betrag x dem mind. 0,5-fachen der Blechdicke.

Weitere Einzelheiten der Erfindung und der Formgebung der Gelenkgabel ergeben sich aus den Ansprüchen 8 bis 11.

Anspruch 12 kennzeichnet eine bevorzugte Ausbildung der Zentralöffnung im Gabelboden, vorzugsweise ihrer Umrandung.

Ein Ausführungsbeispiel der Erfindung wird nachfolgend unter Bezugnahme auf die Zeichnung erläutert.

Es zeigt:

Fig. 1 eine Draufsicht auf eine Blechplatine,

Fig. 2 eine Draufsicht auf eine Gelenkgabel mit dem rechten Arm im Schnitt entlang der Linie II/II in Fig. 1 und

Fig. 3 eine Seitenansicht der Gelenkgabel mit einem linken Gabelarm in Schnitt gemäß der Linie III/III in Fig. 2.

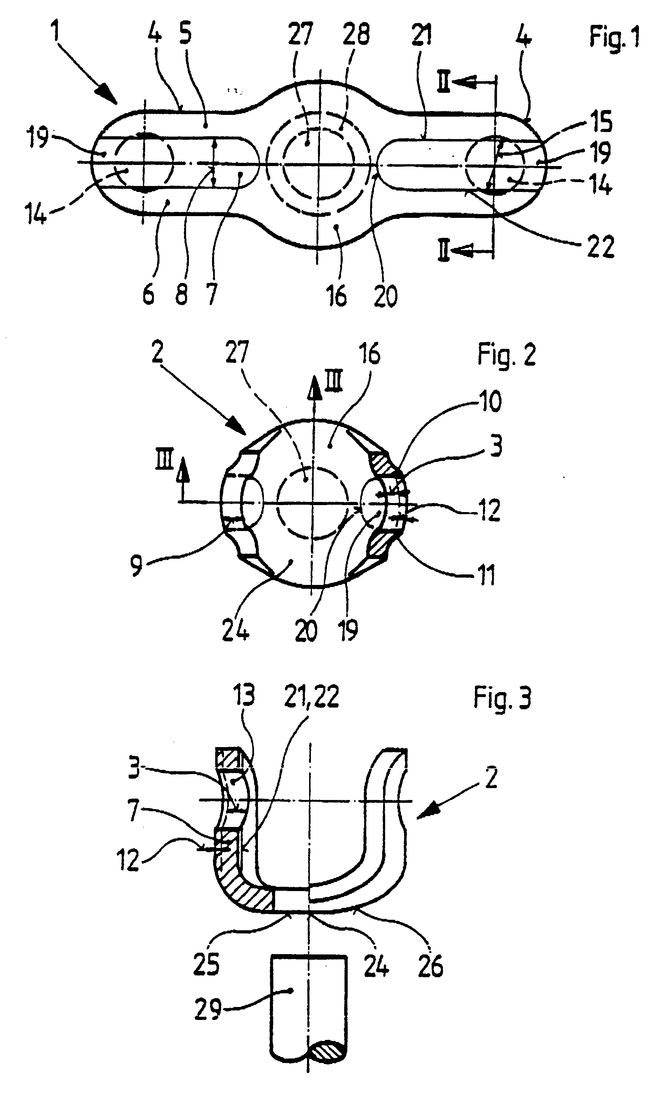

Fig. 1 zeigt schematisch in Draufsicht eine Blechplatine 1 mit zwei Gabelarmen 4 und den diese verbindenden Kraftübertragungsbereich 16.

Im Zentrum des Kraftübertragungsbereiches 16 ist eine Zentralöffnung 27 mit einem Kragen 28 angedeutet. Die Gelenkgabel kann aber auch ohne Zentralöffnung und Kragen zum Einsatz kommen.

In jedem Gabelarm ist eine Aufnahmeöffnung 14 durch eine gestrichelte Linie angedeutet. Diese Andeutung läßt erkennen, daß die Aufnahmeöffnungen 14 schon in die flache Blechplatine 1 eingebracht werden können, daß sie aber auch am Schluß der Herstellung in die Gabelarme eingebohrt werden können.

Jeder Gabelarm weist zwei Randbereiche 5 und 6 auf, zwischen denen ein mittlerer Bereich 7 mit einer Breite 8 liegt. Dieser mittlere Bereich 7 ist während des Herstellungsverfahrens als Sicke 19 mit einer Grundkante 20 und zwei Seitenkanten 21 und 22 ausgebildet. Entlang der Seitenkanten 21 und 22 jedes mittleren Bereiches sind (Fig. 2) Übergangsbreiche 10 und 11 enthalten, innerhalb derer ein Übergang zwischen der Blechdicke 3 der Randbereiche 5 und 6 und der Dicke 9 des mittleren Bereiches 7 stattfindet. In Fig. 2, rechter Gabelarm, ist die Blechdicke 3 angedeutet. Die Dicke 9 des mittleren Bereiches ist um den Betrag x, 12 dicker, als die Blechdicke 3. Hieraus ergibt sich die Breite der Anlagefläche 13 (linker Gabelarm Fig. 3) für die Aufnahmeöffnung 14.

Fig. 1 läßt erkennen, daß die Breite 8 des mittleren Bereiches 7 größer, innen aber kleiner ist, als der Durchmesser 15 der Aufnahmeöffnung.

Die Gelenkgabel 2 gemäß Fig. 3 läßt ebenfalls erkennen, daß der mittlere Bereich 7 eines Gelenkarmes um den Betrag x, 12 dicker ist, als die Blechdicke 3.

Durch die Auswahl der Werkzeuge beim Fertigpressen der Gelenkgabel 2 kann die Dicke 9 des mittleren Bereiches vorgegeben werden. Normalerweise entspricht der Betrag x, 12 dem 0,2 bis 0,5-fachen der Blechdicke 3. In bevorzugten Ausführungsbeispielen entspricht dieser Betrag 12 dem mind. 1,5-fachen der Blechdicke 3. Damit wird eine hinreichend breite Anlagefläche 13 für die nicht dargestellten Drehzapfenlager zur Verfügung gestellt. In einer Anzahl von Fällen genügt es, wenn die Dicke 9 der mittleren Bereiche zumindest in den Übergangsbereichen 10 und 11 zu den Randbereichen 5 und 6 stärker ist als die Blechdicke. In zahlreichen Ausführungsbeispielen ist es jedoch erforderlich, daß die Dicke 9 des mittleren Bereiches 7 über seine gesamte Breite 8 hinweg um den Betrag x, 12 stärker ist als die Blechdicke 3.

In Fig. 2 ist mit einer gestrichelten Linie im Gabelboden 24 eine Zentralöffnung 27 angedeutet. Fig. 3 zeigt schematisch die Gelenkgabel 2, bei der der Gabelboden 24 auf der linken Seite als ebene Bodenfläche 25 und auf der rechten Seite als kugelartig ausgebildete Bodenfläche 26 ausgebildet ist. In beiden Fällen kann die Anschlußwelle 29 angeschlossen werden.

Liste der verwendeten Bezeichnungen

1 Blechplatine
2 Gelenkgabel
3 Blechdicke
4 Gabelarm
5 Randbereich
6 Randbereich
7 mittlerer Bereich
8 Breite
9 Dicke
10 Übergangsbereich
11 Übergangsbereich
12 Betrag x
13 Anlagefläche
14 Aufnahmeöffnung
15 Durchmesser
16 Kraftübertragungsbereich
17
18
19 Sicke
20 Grundkante
21 Seitenkante
22 Seitenkante
23
24 Gabelboden
25 Bodenfläche, eben
26 Bodenfläche, kugelartig

27 Zentralöffnung
28 Kragen
29 Anschlußwelle

## Ansprüche

1. Aus einer Blechplatine geformte Gelenkgabel für Kreuzgelenke mit zwei Gabelarmen für je eine Aufnahmeöffnung für ein Drehzapfenlager und einem diese miteinander und mit einer Anschlußwelle verbindenden Kraftübertragungsbereich, dadurch gekennzeichnet, daß jeder Gabelarm (4) zwei Randbereiche (5, 6) von Blechdicke (3) und einen dazwischen liegenden Bereich (7) aufweist, dessen Breite (8) innen kleiner ist als der Durchmesser (15) der Aufnahmeöffnung (14) für das Drehzapfenlager und dessen Dicke (9) zumindest in den Übergangsbereichen (10, 11) zu den Randbereichen (5, 6) um einen Betrag x (12) stärker ist, als die Blechdicke (3).

2. Gelenkgabel nach Anspruch 1, dadurch gekennzeichnet, daß die Dicke (9) des Mittleren Bereiches (7) über seine gesamte Breite (8) um den Betrag x (12) stärker ist, als die Blechdicke (3).

3. Gelenkgabel nach Anspruch 1, dadurch gekennzeichnet, daß jede Aufnahmeöffnung (14) so in den Gabelarm (4) eingebracht ist, daß die Anlagefläche (13) für das Drehzapfenlager, zumindest in den Übergangsbereichen (10, 11) zu den Randbereichen (5, 6) um den Betrag x (12) stärker ist als die Blechdicke (3).

4. Gelenkgabel nach Anspruch 2, dadurch gekennzeichnet, daß jede Aufnahmeöffnung (14) so in den Gabelarm (4) eingebracht ist, daß die Anlagefläche (13) für das Drehzapfenlager entlang des gesamten Umfanges der Aufnahmeöffnung (14) um den Betrag x (12) stärker ist, als die Blechdicke (3).

5. Gelenkgabel nach den Ansprücken 1 bis 4, dadurch gekennzeichnet, daß der zwischen den Randbereichen (5, 6) liegende Bereich (7) jedes Gabelarmes (4) als vom Kraftübertragungsbereich (16) zu seinem Außenrand hin reichende Sicke (19) mit einer Grundkante (20) und zwei Seitenkanten (21, 22) ausgebildet ist.

6. Gelenkgabel nach einem oder mehreren der Ansprüche 1 bis 5, dadurch gekennzeichnet, daß der Betrag x (12) dem 0,2 bis ca. 0,5-fachen der Blechdicke (3) entspricht.

7. Gelenkgabel nach einem oder mehreren der Ansprüche 1 bis 5, dadurch gekennzeichnet, daß der Betrag x (12) dem mind. 0,5-fachen der Blechdicke (3) entspricht.

8. Gelenkgabel nach einem oder mehreren der Ansprüche 1 bis 7, dadurch gekennzeichnet, daß ihr Kraftübertragungsbereich (16) als Gabelboden (24) ausgebildet ist.

9. Gelenkgabel nach Anspruch 8, dadurch gekennzeichnet, daß zum stumpfen Anschluß einer Anschlußwelle (29) ein Gabelboden (24) mit kugelartig ausgewölbter Bodenfläche (26) verwendet wird.

10. Gelenkgabel nach Anspruch 8, dadurch gekennzeichnet, daß zum stumpfen Anschluß einer Anschlußwelle (29) ein Gabelboden (24) mit einer ebenen Bodenfläche (25) verwendet wird.

11. Gelenkgabel nach einem oder mehreren der Ansprüche 1 bis 10, dadurch gekennzeichnet, daß zum Anschluß einer als Einsteckwelle ausgebildeten Anschlußwelle (29) ein Gabelboden (24) mit einer Zentralöffnung (27) verwendet wird.

12. Gelenkgabel nach Anspruch 11, dadurch gekennzeichnet, daß die Zentralöffnung (27) im Gabelboden (24) von einem zur Anschluß- bzw. Einsteckwelle (29) hinweisenden innen- oder außenliegenden Kragen (28) umgeben ist, dessen Außen- und/oder Innenkonturen denjenigen der Anschluß- bzw. Einsteckwelle (29) entsprechen.

Fig. 1

Fig. 2

Fig. 3

5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 067 283 (PADGETT)<br>* Das ganze Dokument * | 1,3,4,7,8, 12 | F 16 D 3/38 |
| Y | | 6,10 | |
| Y | GB-A-2 053 417 (NADELLA)<br>* Das ganze Dokument * | 6 | |
| Y | FR-A-2 185 127 (PITNER)<br>* Das ganze Dokument * | 10 | |
| A | FR-A-2 165 020 (GEMMER FRANCE)<br>* Das ganze Dokument * | 1 | |
| P,X | DE-U-8 910 846 (LANZ INDUSTRIE-TECHNIK)<br>* Das ganze Dokument * | 1-12 | |

RECHERCHIERTE SACHGEBIETE (Int. Cl.5)

F 16 D 3/00

Der vorliegende Recherchenbericht wurde für alle Patentansprüche erstellt

| Recherchenort | Abschlußdatum der Recherche | Prüfer |
|---|---|---|
| Den Haag | 28 November 90 | BALDWIN D.R. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    .................................................................
& : Mitglied der gleichen Patentfamilie,
    übereinstimmendes Dokument